Europäisches Patentamt

European Patent Office

Office européen des brevets

(11) Numéro de publication: **0 394 104**
**A1**

## DEMANDE DE BREVET EUROPEEN

(21) Numéro de dépôt: **90401005.5**

(22) Date de dépôt: **12.04.90**

(51) Int. Cl.5: **B66D 3/00, F16G 11/04**

(30) Priorité: **20.04.89 FR 8905256**

(43) Date de publication de la demande:
**24.10.90 Bulletin 90/43**

(84) Etats contractants désignés:
**DE FR GB IT NL**

(71) Demandeur: **CIBELES INTERNATIONAL INC.**
**P.O. Box 5108**
**Panama 5(PA)**

(72) Inventeur: **Biass, David**
**7 rue Chandieu**
**Geneve(FR)**

(74) Mandataire: **Lefebure, Gérard et al**
**Office Blétry 2, boulevard de Strasbourg**
**F-75010 Paris(FR)**

(54) Bloc de serrage à mâchoires auto-serreuses, notamment pour treuil hydraulique linéaire.

(57) Ce bloc de serrage (1) comprend un corps (2) présentant un passage allongé (3) pour un objet (4) à serrer, ayant deux surfaces inclinées mutuellement opposées (3a et 3b), une paire de mâchoires (5a et 5b), en forme de coin, qui sont montées mobiles dans ledit passage entre une première position dans laquelle les mâchoires serrent ledit objet, et une seconde position dans laquelle elles relâchent l'objet, deux jeux de rouleaux (6a et 6b) formant des chemins de roulement pour les mâchoires associées, les rouleaux (6a ou 6b) de chaque jeu étant supportés et montés à rotation dans un cadre de montage (7a ou 7b) qui peut glisser par rapport à la mâchoire correspondante et audit corps, et un ressort de compression (16) interposé entre chaque mâchoire (5a ou 5b) et le cadre (7a ou 7b) du jeu de rouleaux (6a ou 6b) y associé, chaque ressort s'appuyant d'un côté sur la mâchoire y associée pour la solliciter vers sa première position et, du côté opposé, sur une surface antagoniste d'appui (18) prévue à une extrémité dudit cadre pour repousser celui-ci au contact d'une butée (25) prévue sur ledit corps (2).

**Bloc de serrage à mâchoires auto-serreuses, notamment pour treuil hydraulique linéaire.**

La présente invention concerne un bloc de serrage à mâchoires auto-serreuses, comprenant un corps présentant un passage allongé pour un objet à serrer, ledit passage ayant deux surfaces mutuellement opposées, dont l'une au moins est inclinée par rapport à l'axe longitudinal du passage, une paire de mâchoires, dont l'une au moins a une forme en coin et qui sont montées mobiles en gros longitudinalement dans ledit passage entre une première position dans laquelle les mâchoires serrent ledit objet, et une seconde position dans laquelle elles relâchent l'objet, un jeu de rouleaux disposé entre chaque mâchoire et l'une des deux surfaces opposées dudit passage et formant un chemin de roulement pour la mâchoire associée, les rouleaux de chaque jeu étant supportés et montés à rotation à leurs extrémités dans un cadre de montage qui peut glisser par rapport à la mâchoire correspondante et audit corps dans une direction parallèle à la direction longitudinale de déplacement de la mâchoire.

Les blocs de serrage du type sus-indiqué sont notamment, mais non exclusivement utilisés dans les treuils hydrauliques linéaires. A ce propos, on pourra se référer par exemple au brevet US 4 615 509 ou au brevet correspondant EP 0 220 968, ou encore aux brevets US 2 400 514, 3 758 922, 3 762 512 et 4 381 584. Habituellement, un premier ressort est associé à chaque jeu de rouleaux et agit sur le cadre de montage desdits rouleaux de manière à prépositionner ceux-ci dans une position telle que, lorsque la mâchoire associée se déplace de sa seconde position vers sa première position, c'est-à-dire vers la position de serrage, le jeu de rouleaux puisse accomppagner la mâchoire dans son déplacement, en roulant sur l'une des deux surfaces opposées du passage du corps du bloc de serrage et sur la surface en vis à vis de la mâchoire (voir les brevets US 2 400 514 et 3 762 512). En outre, un second ressort, différent du premier ressort, est parfois aussi associé à chaque mâchoire, ce second ressort étant usuellement interposé entre la mâchoire associée et le corps du bloc de serrage de manière à solliciter la mâchoire vers sa première position ou position de serrage.

D'autre part, il est parfois nécessaire de pouvoir commander positivement les mâchoires, par exemple pour les maintenir dans leur seconde position ou position déserrée. Cela est par exemple le cas lorsque le bloc de serrage est utilisé dans un treuil hydraulique qui doit être capable non seulement d'exercer une traction sur un câble pour soulever une charge, mais aussi de relâcher progressivement le câble pour descendre la charge. A cet effet, il est connu d'associer aux deux mâchoires du bloc de serrage au moins un vérin hydraulique auxiliaire qui, lorsqu'il est actionné, repousse les deux mâchoires vers leur seconde position (voir par exemple le brevet US 4 615 509). Quand le second ressort sus-indiqué est prévu, il suffit alors d'utiliser à titre de vérin auxiliaire un vérin hydraulique à simple effet pour commander les mâchoires. Par contre, quand le second ressort n'est pas prévu, il faut alors utiliser à titre de vérin hydraulique auxiliaire un vérin à double effet, mais cela nécessite dans ce cas l'utilisation d'un distributeur de fluide hydraulique plus compliqué que dans le cas d'un vérin à simple effet.

La présente invention a donc pour but de fournir un bloc de serrage dans lequel il est possible de réaliser, à l'aide d'un unique ressort pour chaque mâchoire, les fonctions qui étaient auparavant réalisées par les premier et second ressorts susmentionnés, de sorte que, si on désire commander positivement les mâchoires, il est encore possible d'utiliser un vérin auxiliaire à simple effet malgré l'utilisation d'un seul ressort.

A cet effet, le bloc de serrage de la présente invention est caractérisé en ce qu'un ressort de compression est interposé entre chaque mâchoire et le cadre du jeu de rouleaux y associé, chaque ressort s'appuyant d'un côté sur la mâchoire y associée pour la solliciter vers sa première position et, du côté opposé, sur une surface antagoniste d'appui prévue à une extrémité dudit cadre pour repousser celui-ci au contact d'une butée prévue sur ledit corps.

Suivant une forme préférée d'exécution de la présente invention, chaque mâchoire peut avantageusement comporter un trou cylindrique, dont l'axe est parallèle au chemin de roulement défini par le jeu de rouleaux associé à la mâchoire, et le ressort de compression est un ressort hélicoïdal qui est disposé dans ledit trou cylindrique.

D'autres caractéristiques et avantages de la présente invention apparaîtront mieux au cours de la description qui va suivre d'une forme préférée d'exécution de l'invention donnée en référence aux dessins annexés sur lesquels :

La figure 1 est une vue en coupe longitudinale, suivant la ligne I-I de la figure 2, montrant un bloc de serrage conforme à la présente invention.

La figure 2 est une vue en coupe transversale, suivant la ligne II-II de la figure 1, du bloc de serrage de l'invention.

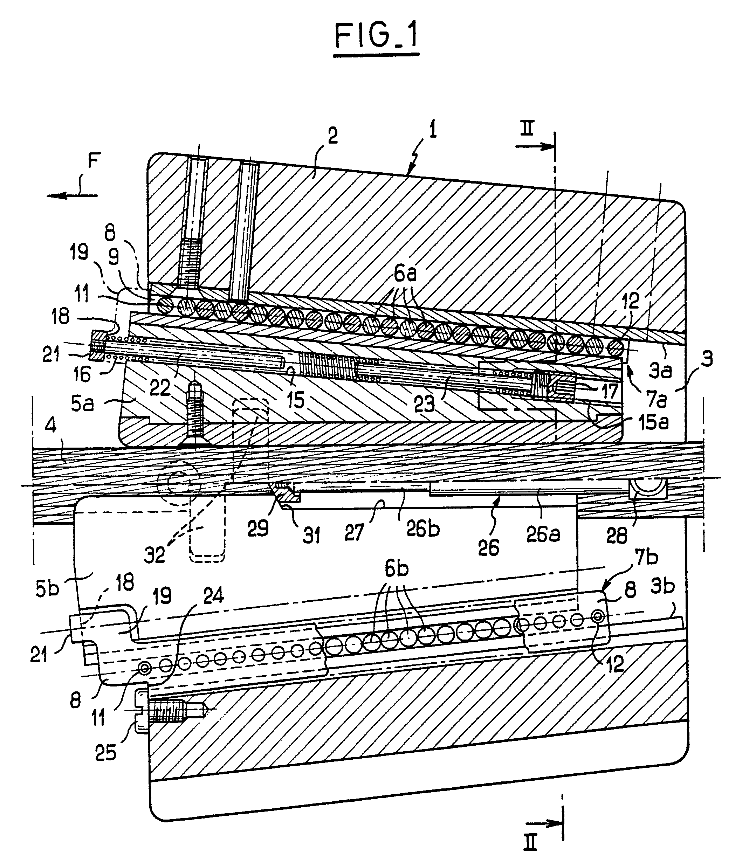

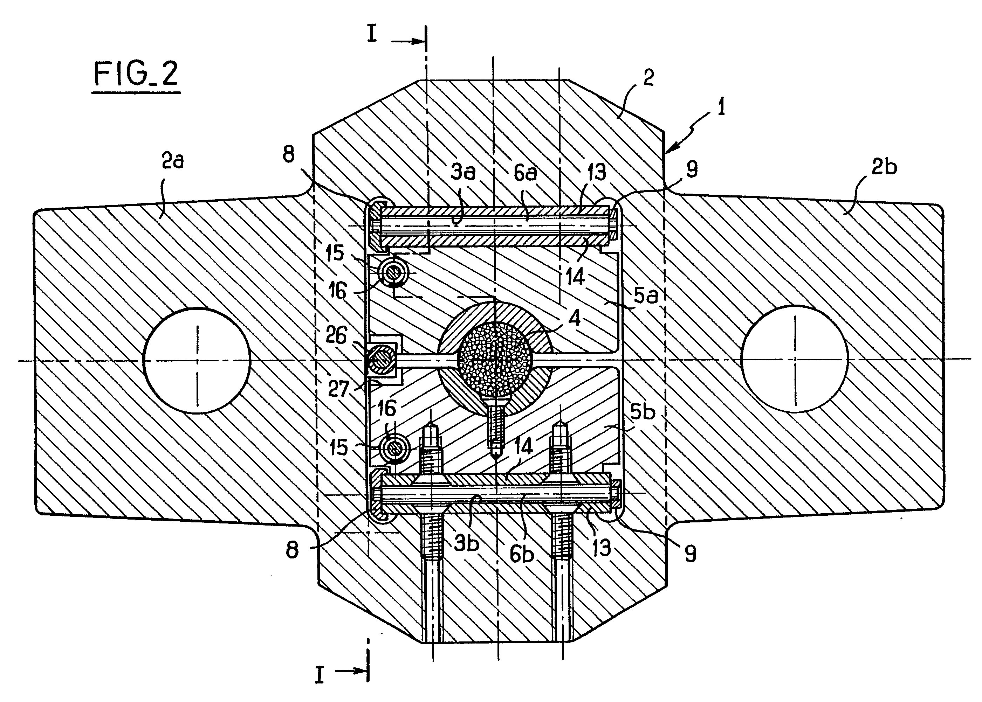

Le bloc de serrage 1 représenté sur les figures 1 et 2 comprend un corps 2, réalisé par exemple en un métal moulé, qui comporte un passage 3, dans lequel passe un objet à serrer, par exemple un câble 4. Le passage 3 comporte deux surfaces planes mutuellement opposées 3a et 3b. Au moins l'une des deux surfaces 3a et 3b, de préférence les deux surfaces sont inclinées par rapport à l'axe longitudinal du passage 3 et convergent l'une vers l'autre.

Une paire de mâchoires 5a et 5b est disposée dans le passage 3. Au moins l'une des deux mâchoires, de préférence les deux mâchoires 5a et 5b ont une forme en coin. Un jeu de rouleaux 6a ou 6b est disposé entre la mâchoire 5a ou 5b et la surface correspondante 3a ou 3b du passage 3. A leurs deux extrémités les rouleaux 6a ou 6b de chaque jeu sont supportés et montés à rotation dans un cadre 7a ou 7b. Chacun des deux cadres 7a et 7b est formé par deux plaques 8 et 9, qui s'étendent dans la direction longitudinale du passage 3, et par deux traverses 11 et 12 fixées rigidement aux plaques 8 et 9. Comme montré dans la figure 2, au moins l'une des deux plaques 8 et 9 de chacun des deux cadres 7a et 7b, par exemple la plaque 8 présente une section transversale en forme de C et chevauche les bords adjacents longitudinaux de deux plaques 13 et 14 qui sont fixées respectivement au corps 2 et à la mâchoire 5a ou 5b. Les plaques 13 et 14 sont en un métal plus dur que ceux constituant le corps 2 et les mâchoires 5a et 5b, et elles forment des surfaces de roulement pour les rouleaux 6a ou 6b. Du fait de la forme en C de la section transversale des plaques 8 des cadres 7a et 7b, les plaques 8 maintiennent chacune des deux mâchoires 5a et 5b à une distance constante de la surface correspondante 3a ou 3b du passage 3 du corps 2, tout en permettant à chacun des deux cadres 7a et 7b de glisser par rapport à la mâchoires correspondante 5a ou 5b et par rapport au corps 2 dans une direction parallèle à la direction longitudinale de déplacement de chacune des mâchoires.

Tous les éléments du bloc de serrage 1 qui ont été décrits ci-dessus sont bien connus, de sorte qu'il n'est pas nécessaire de les décrire plus en détail.

Dans la forme d'exécution représentée sur les figures 1 et 2, chaque mâchoire 5a ou 5b comporte un trou cylindrique 15, dont l'axe est parallèle au chemin de roulement défini par le jeu de rouleaux 6a ou 6b associé à la mâchoire. Un ressort hélicoïdal de compression 16 est disposé dans chacun des deux trous cylindriques 15. Bien que le trou 15 pourrait être un trou borgne, il s'étend de préférence sur toute la longueur de la mâchoire 5a ou 5b correspondante et il est taraudé sur une partie 15a de sa longueur comme cela est illustré dans la figure 1 à propos de la mâchoire 5a. Un bouchon fileté 17 est vissé dans la partie taraudée 15a du trou 15 de chacune des deux mâchoires 5a et 5b. Chacun des deux ressorts 16 s'appuie, à l'une de ses extrémités contre le bouchon 17 correspondant et, à son autre extrémité, il s'appuie contre une surface antagoniste d'appui 18 prévue à une extrémité du cadre 7a ou 7b.

Comme montré dans la figure 2, le trou cylindrique 15 de chacune des deux mâchoires 5a et 5b peut être par exemple formé à proximité d'un des deux côtés longitudinaux du cadre 7a ou 7b, par exemple à côté de la plaque 8 dudit cadre. Dans ces conditions, la plaque 8 peut comporter, à une de ses extrémités un prolongement 19 en forme d'équerre avec une partie repliée 21 qui fait face au trou cylindrique 15 et qui forme ladite surface antagoniste d'appui 18 comme montré dans la figure 1. De préférence, une tige de guidage 22 est fixée par une extrémité à la partie repliée 21 du prolongement 19 de chacun des deux cadres 7a et 7b, et la tige 22 est engagée axialement, avec un jeu radial, dans le trou cylindrique 15 de la mâchoire 5a ou 5b correspondante. Bien que cela ne soit pas absolument indispensable, chacun des deux bouchons 17 peut être également prolongée par une tige de guidage 23 s'étendant à partir dudit bouchon vers la tige 22 comme cela est montré dans la figure 1. Chacun des deux ressorts de compression 16 est disposé coaxialement autour des tiges 22 et 23. La précontrainte de chacun des deux ressorts 16 peut être réglée en vissant le bouchon 17 plus ou moins profondément dans la partie taraudée 15a du trou 15 de la mâchoire correspondante 5a ou 5b. La plaque 8 de chacun des deux cadres 7a et 7b présente, à l'une de ses extrémités, une encoche formant un cran d'arrêt 24, qui peut venir en contact avec une butée 25 prévue sur le corps 2. Comme montré dans la figure 1, la butée 25 peut être par exemple constituée par la tête d'une vis qui est vissée dans un trou taraudé prévu dans le corps 2.

Avec l'arrangement décrit plus haut, il est clair que chacun des deux ressorts 16 pousse la partie 21 du cadre 7a ou 7b correspondant, donc le cadre lui-même, dans la direction de la flèche F jusqu'à ce que le cran d'arrêt 24 du cadre vienne en contact avec la butée 25. En même temps, chaque ressort 16 pousse la mâchoire 5a ou 5b correspondante dans la direction opposée à la flèche F, de telle façon que ladite mâchoire vienne en contact avec le câble 4. Le bloc de serrage 1 est alors prêt à fonctionner. En effet, si le corps 2 du bloc de serrage 1 est déplacé dans la direction de la flèche F par des moyens d'actionnement appropriés, par exemple deux vérins hydrauliques (non montrés) dont les tiges de piston sont fixées respectivement à des bossages latéraux 2a et 2b du corps 2 (figure 2), les deux mâchoires 5a et 5b sont retenues par le câble 4, à cause des frottements entre celui-ci et les deux mâchoires, de sorte que ces dernières sont fermement pressées contre le câble par le corps 2 du fait de l'inclinaison des surfaces 3a et 3b du passage 3 et du fait du mouvement relatif entre le corps 2 et les deux mâchoires 5a et 5b. Dans ces conditions, le bloc de serrage 1 entraîne avec lui le câble 4 dans le sens de la flèche F. Inversement, un déplacement du corps 2 dans la direction opposée à la flèche F ou un déplacement du câble 4 dans la direction de la flèche F provoquera un mouvement relatif entre le corps 2 et les deux mâchoires 5a et 5b, tel que les deux mâchoires relâcheront le câble 4 et pourront glisser sur celui-ci.

Quand cela est nécessaire, un vérin hydraulique 26, à simple effet, peut être prévu pour commander positivement les mâchoires de telle manière que, lorsque le vérin 26 est actionné, les mâchoires 5a et 5b sont poussées dans la direction de la flèche F contre la force de rappel des ressorts 16 et sont écartées suffisamment du câble 4 pour le laisser passer librement entre elles sans frottement. Comme montré dans la figure 2, le vérin 26 peut être avantageusement disposé dans le passage 3 dans une cavité 27 formée entre les deux mâchoires 5a et 5b. Par exemple, le cylindre 26a peut être fixé en 28 au corps 2, et la tige de piston 26b du vérin 26 peut agir, par l'intermédiaire d'une pièce de poussée 29 sur un épaulement 31 formé sur chacune des deux mâchoires 5a et 5b, afin de pousser ces deux mâchoires dans la direction de la flèche F quand le vérin 26 est actionné. On notera que, lorsque la pression hydraulique est relâchée dans le vérin 26, les ressorts 16 ont pour effet de pousser la tige de piston 26b pour la rétracter dans le cylindre 26a.

Dans la figure 1, la mâchoire 5a est représentée dans une position dans laquelle elle serre le câble 4, tandis que la mâchoire 5b est représentée dans une position dans laquelle elle relâche le câble 4. Toutefois, dans la pratique, les deux mâchoires 5a et 5b sont couplées de façon connue, par exemple par une barrette d'accouplement 32 de manière à être simultanément dans une position de serrage ou dans une position de desserrage du câble.

Il est bien entendu que la forme d'exécution de l'invention qui a été décrite ci-dessus a été donnée à titre d'exemple purement indicatif et nullement limitatif et que de nombreuses modifications peuvent être facilement apportées par l'homme de l'art sans pour autant sortir du cadre de la présente invention. C'est ainsi par exemple que la plaque 9 de chacun des deux cadres 7a et 7b peut être identique à la plaque 8, et le trou cylindrique 15, au lieu d'être formé à proximité de la plaque 8, peut être formé à proximité de la plaque 9. A titre de variante, un trou cylindrique 15 peut être formé à proximité de chacune des deux plaques 8 et 9 de chacune des deux mâchoires 5a et 5b, un ressort 16 étant alors disposé dans chacun des deux trous 15 de chaque mâchoire.

## Revendications

1.- Bloc de serrage à mâchoires auto-serreuses, comprenant un corps (2) présentant un passage allongé (3) pour un objet (4) à serrer, ledit passage ayant deux surfaces mutuellement opposées (3a et 3b), dont l'une au moins est inclinée par rapport à l'axe longitudinal du passage, une paire de mâchoires (5a et 5b), dont l'une au moins a une forme en coin et qui sont montées mobiles en gros longitudinalement dans ledit passage entre une première position dans laquelle les mâchoires serrent ledit objet, et une seconde position dans laquelle elles relâchent l'objet, un jeu de rouleaux (6a ou 6b) disposé entre chaque mâchoire et l'une des deux surfaces opposées dudit passage et formant un chemin de roulement pour la mâchoire associée, les rouleaux (6a ou 6b) de chaque jeu étant supportés et montés à rotation à leurs extrémités dans un cadre de montage (7a ou 7b) qui peut glisser par rapport à la mâchoire correspondante et audit corps dans une direction parallèle à la direction longitudinale de déplacement de la mâchoire, caractérisé en ce qu'un ressort de compression (16) est interposé entre chaque mâchoire (5a ou 5b) et le cadre (7a ou 7b) du jeu de rouleaux (6a ou 6b) y associé, chaque ressort s'appuyant d'un côté sur la mâchoire y associée pour la solliciter vers sa première position et, du côté opposé, sur une surface antagoniste d'appui (18) prévue à une extrémité dudit cadre pour repousser celui-ci au contact d'une butée (25) prévue sur ledit corps (2).

2.- Bloc de serrage selon la revendication 1, caractérisé en ce que chaque mâchoire (5a ou 5b) comporte un trou cylindrique (15), dont l'axe est parallèle au chemin de roulement défini par le jeu de rouleaux (6a ou 6b) associé à la machoire (5a ou 5b), et en ce que le ressort de compression (16) est un ressort hélicoïdal qui est disposé dans ledit trou cylindrique (15).

3.- Bloc de serrage selon la revendication 2, caractérisé en ce ledit trou cylindrique (15) est formé dans la mâchoire (5a ou 5b) à proximité d'un côté longitudinal (8) du cadre (7a ou 7b), et en ce que ledit côté longitudinal (8) du cadre comporte un prolongement (19) en forme d'équerre avec une partie repliée (21) qui fait face audit trou cylindrique (15) et qui forme ladite surface antagoniste d'appui (18).

4.- Bloc de serrage selon la revendication 3, caractérisé en ce qu'une tige de guidage (22) est fixée par une extrémité à la partie repliée (21) du prolongement (19) du cadre (7a ou 7b) et est engagée axialement et avec un jeu radial dans ledit trou cylindrique (15), le ressort de compresssion (16) étant disposé coaxialement autour de ladite tige (22).

5.- Bloc de serrage selon la revendication 2, caractérisé en ce que ledit trou cylindrique (15) s'étend sur toute la longueur de la mâchoire (5a ou 5b) et est taraudé sur une partie (15a) de sa longueur, et en ce qu'un bouchon fileté (17) est vissé dans la partie taraudée (15a) du trou cylindrique (15) pour le réglage de la précontrainte dudit ressort de compression (16).

# FIG.1

FIG_2

EP 0 394 104 A1

Office européen
des brevets

**RAPPORT DE RECHERCHE EUROPEENNE**

Numero de la demande

EP 90 40 1005

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-2 146 091 (EMMETT) <br> * Figure 4; page 3, lignes 18-41 * <br> --- | 1 | B 66 D 3/00 <br> F 16 G 11/04 |
| A | FR-A-2 491 991 (GRAY) <br> * Page 10, lignes 27-40; figures 4a-5 * <br> --- | 1 | |
| A,D | US-A-3 762 512 (McINTYRE) <br> * Figure 4; colonne 3, lignes 10-42 * <br> --- | 1 | |
| A | EP-A-0 220 968 (CIBELES INTERNATIONAL INC.) <br> * Colonne 2, lignes 14-35; colonne 3, lignes 35-57; figures 6-8 * & US-A-4 615 509 (Cat. A,D) <br> --- | 1 | |
| A | DE-C-3 329 152 (M.A.N. AG) <br> * Figures * <br> --- | 1 | |
| A | DE-C- 9 786 (HARFIELD) <br> ----- | | |

|  |
|---|
| **DOMAINES TECHNIQUES RECHERCHES (Int. Cl.5)** |
| B 66 D <br> B 66 F <br> E 04 G <br> E 21 B <br> F 16 G |

Le présent rapport a été établi pour toutes les revendications

| Lieu de la recherche | Date d'achèvement de la recherche | Examinateur |
|---|---|---|
| LA HAYE | 30-07-1990 | GUTHMULLER J.A.H. |